**Europäisches Patentamt**

**European Patent Office**

**Office européen des brevets**

(19)

(11) Veröffentlichungsnummer: **0 224 670 B1**

# EUROPÄISCHE PATENTSCHRIFT

(12)

(45) Veröffentlichungstag der Patentschrift: **13.11.91**

(21) Anmeldenummer: **86113032.6**

(22) Anmeldetag: **22.09.86**

(51) Int. Cl.⁵: **C01B 33/18**, C09C 1/30, B01J 19/06

(54) Verfahren zur Verstärkung der verdickenden Wirkung von auf pyrogenem Wege hergestelltem Siliciumdioxid.

(30) Priorität: **29.11.85 DE 3542240**

(43) Veröffentlichungstag der Anmeldung:
**10.06.87 Patentblatt 87/24**

(45) Bekanntmachung des Hinweises auf die
Patenterteilung:
**13.11.91 Patentblatt 91/46**

(84) Benannte Vertragsstaaten:
**DE GB**

(56) Entgegenhaltungen:
**DE-A- 2 524 309**
**DE-B- 2 359 619**
**DE-C- 1 103 313**
**GB-A- 1 167 037**

(73) Patentinhaber: **Degussa Aktiengesellschaft**
**Weissfrauenstrasse 9**
**W-6000 Frankfurt am Main 1(DE)**

(72) Erfinder: **Ettlinger, Manfred, Dr.**
**Stifterstrasse 22**
**W-8757 Karlstein(DE)**
Erfinder: **Mathias, Johann, Dr.**
**Rheinstrasse 53**
**W-6457 Maintal 1(DE)**
Erfinder: **Stadtmüller, Günter**
**Kapellenstrasse 31**
**W-8755 Alzenau-Hörstein(DE)**

EP 0 224 670 B1

## Beschreibung

Die Erfindung betrifft ein Verfahren zur Verstärkung der verdickenden Wirkung von auf pyrogenem Wege hergestelltem Siliciumdioxid in wässriger Dispersion.

Es ist bekannt, wässrigen Dispersionen von auf pyrogenem Wege hergestelltem Siliciumdioxid zur Verstärkung der verdickenden Wirkung polyethylenoxidgruppenhaltige Verbindungen zuzusetzen. Derartige Verbindungen sind zum Beispiel Polyäthylenglykole, ethoxylierte Amine, ethoxylierte Diamine, quaternisierte ethoxylierte Amine (vgl. DE-AS 25 24 309).

Gegenstand der Erfindung ist ein Verfahren zur Verstärkung der verdickenden Wirkung von auf pyrogenem Wege hergestelltem Siliciumdioxid in wässriger Dispersion, welches dadurch gekennzeichnet ist, daß man der Dispersion ein ethoxyliertes Polyethylenamin zusetzt.

In einer bevorzugten Ausführungsform kann man ein ethoxyliertes Polyethylenamin, das ein Molekulargewicht zwischen 400 und 8000, insbesondere zwischen 2000 und 4000 aufweist, verwenden.

Das ethoxylierte Polyethylenamin kann der wässrigen Dispersion in einer Menge von 0,1 bis 4 Gew.-%, vorzugsweise 0,5 bis 1,5 Gew.-%, bezogen auf das auf pyrogenem Wege herstelltem Siliciumdioxid, zugesetzt werden.

Die Herstellung von ethoxylierten Polyethylenaminen ist bekannt und erfolgt durch Umsetzung von Polyethylenaminen mit Ethylenoxid. Die Länge der Polyethylenaminketten und der Ethoxylierungsgrad können in sehr großem Maße variiert werden. Diese Substanzen liegen als viskose Flüssigkeiten oder Pasten vor und sind leicht wasserlöslich. Als besonders effektiv haben sich Triethylentetraamin bis Octaethylennonamin mit Ethoxylierungsgraden von - je nach der Länge der EA-Kette - 20 bis 120 EO erwiesen.

Die Polyethylenaminkette braucht nicht durch Aminogruppen terminiert sein - die üblicher Weise ebenfalls ethoxyliert werden - sondern können an den entsprechenden Stellen auch andere Reste, wie z.B. Ester-, Carbonsäureamid-, Alkyl-, Aryl-, Alkoyl- oder Aroylgruppen, aufweisen.

Die geeigneten ethoxylierten Polyethylenamine können Molekulargewichte - je nach Kettenlänge und Ethoxylierungsgrad - von 400 - 8000 besitzen.

Vorteilhafterweise werden die mit auf pyrogenem Wege hergestelltem Siliciumdioxid und den erfindungsgemäß verwandten Additiven erzielten Viskositäten von Erdalkalisalzen - wie sie z.B. als Härtebilder im Wasser auftreten - auch in hohen Konzentrationen nur wenig beeinträchtigt.

## Beispiele

Die Viskosität wird mit dem Brookfield-Viskosimeter der Firma Colora Meßtechnik GmbH bestimmt. Der Thixotropieindex ist der Quotient aus der Viskosität gemessen bei 5 Upm und der Viskosität gemessen bei 50 Upm mit dem Brookfiled-Viskosimeter.

## Vergleichsbeispiel

3 g auf pyrogenem Wege hergestellte Kieselsäure mit einer spezifischen Oberfläche (BET) von 205 m²/g und einer mittleren Primärteilchengröße von ca. 12 nm werden in 97 g entionisiertem Wasser mit einem Spatel eingerührt und anschließend 3 min mit einem Dissolver (Zahnscheibenrührer) bei 3000 Upm (Zahnscheibendurchmesser 5 cm) dispergiert. Die Bestimmung der Viskosität bzw. Thixotropie erfolgt mit einem Brookfield-Viskosimeter RVT. Sie beträg bei 5 Upm 100 mPas und bei 50 Upm 50 mPas. Der Quotient aus dem ersten und zweiten Wert, der sogenannte Thixotropie-Index (II), ergab 3,33.

## Beispiel 1

Wie Vergleichsbeispiel 1. Es werden nach der Dispergierung des auf pyrogenem Wege herstelltem Siliciumdioxides ca. 0,03 g eines ethoxylierten Tetraethylenpentamin (30 EO) hinzugegeben und nochmals 3 min unter den gleichen Bedingungen dispergiert.

Viskosität:
12 000 mPas ( 5 Upm)
520 mPas (50 Upm)
Thixotropie-Index:
23,1

## Vergleichsbeispiel 2

0,03 g des ethoxylierten Tetraethylenpentamin (30 EO) werden 3 min ohne Zusatz eines auf pyrogenem Wege hergestellten Siliciumdioxides unter den bereits angegebenen Bedingungen in entionisiertem Wasser dispergiert.
Viskosität
20 mPas ( 5 Upm)
10 mPas (50 Upm)
Thixotropie-Index:
2

## Beispiel 2

Wie Beispiel 1 nur mit einem ethoxylierten Tetraethylenpentamin (20 EO)
Viskosität
7 600 mPas ( 5 Upm)
1 000 mPas (50 Upm)

Thixotropie-Index:
7,6

## Beispiel 3

Wie Beispiel 1 nur mit 91 g Wasser und 6 g darin gelöstem Calciumchlorid.
Viskosität:
8 800 mPas ( 5 Upm)
680 mPas (50 Upm)
Thixotropie-Index:
12,9

## Beispiel 4

Wie Beispiel 1 nur mit einem ethoxyliertem Polyethlenamin (mittleres MG 3000).
Viskosität
7 600 mPas ( 5 Upm)
1 200 mPas (50 Upm)
Thixotropie-Index:
6,3

## Vergleichsbeispiel 3

Wie in Beispiel 1 wird ein ethoxyliertes Talgamin mit 60 EO eingesetzt.
Viskosität
2 250 mPas ( 5 Upm)
750 mPas (50 Upm)
Thixotropie-Index:
3,0

## Vergleichsbeispiel 4

Wie in Beispiel 1 wird ein Polyethylenglykol (MG ca. 500) eingesetzt.
Viskosität
100 mPas ( 5 Upm)
80 mPas (50 Upm)
Thixotropie-Index:
1,25

## Patentansprüche

1. Verfahren zur Verstärkung der verdickenden Wirkung von auf pyrogenem Wege hergestelltem Siliciumdioxid in wässrigen Dispersionen, dadurch gekennzeichnet, daß man der Dispersion ein ethoxyliertes Polyethylenamin zusetzt.

## Claims

1. A process for enhancing the thickening effect of pyrogenic silicon dioxide in aqueous dispersions, characterized in that an ethoxylated polyethylene amine is added to the dispersion.

## Revendications

1. Procédé pour l'accroissement de l'effet d'épaississement de la silice obtenue par des moyens pyrogènes dans une dispersion aqueuse, caractérisé en ce que, on ajoute à la dispersion, une éthoxy polyéthylène amine.